# EUROPEAN PATENT APPLICATION

(11) **EP 4 576 703 A1**
(43) Date of publication of application: **25.06.2025**
(21) Application number: 23890744.8
(22) Date of filing: 14.11.2023
(51) Int. Cl.: H04L 41/0895

(54) **METHOD FOR DEPLOYING VIRTUALIZED NETWORK FUNCTION AND COMMUNICATION DEVICE**

(30) Priority: 18.11.2022 CN 202211447500
(71) Applicant: Huawei Technologies Co., Ltd., Shenzhen, Guangdong 518129 (CN)
(72) Inventor: GENG, Yansong, Shenzhen, Guangdong 518129 (CN); LI, Shitao, Shenzhen, Guangdong 518129 (CN)
(74) Representative: MERH-IP Matias Erny Reichl Hoffmann Patentanwälte PartG mbB
(86) International application number: PCT/CN2023/131390
(87) International publication number: WO 2024/104311

(57) **Abstract**

A method for deploying a virtualized network function and a communication apparatus are provided. The method includes: A first network element sends a first request message to a CaaS manager, where the first request message is used to request to deploy a first VDU of a first VNF, the first request message includes requirement information of the first VDU, the requirement information of the first VDU includes requirement information that is of a node group and that is used to deploy the first VDU, and the node group is a set of one or more nodes in one HA. The first network element receives a first request response message from the CaaS manager, where the first request response message indicates that the first VDU is successfully deployed, the first VDU is deployed on a first node, the first node belongs to a first node group, and the first node group meets the requirement information of the node group. The method can better meet a requirement for co-deployment of a plurality of VNFs in an HA.

## Description

This application claims priority to Chinese Patent Application No. 202211447500.0, filed with the China National Intellectual Property Administration on November 18, 2022 and entitled "METHOD FOR DEPLOYING VIRTUALIZED NETWORK FUNCTION AND COMMUNICATION APPARATUS", which is incorporated herein by reference in its entirety.

### TECHNICAL FIELD

This application relates to the communication field, and more specifically, to a method for deploying a virtualized network function and an apparatus.

### BACKGROUND

In a containerization scenario, when a plurality of virtualized network functions (virtualized network functions, VNFs) share a resource in a host aggregate (host aggregate, HA), because each VNF may independently plan or configure a label of a node corresponding to a board in the HA, as a quantity of deployed VNFs increases, labels of different VNFs on a same node constantly increase and stack on each other. As a result, management costs of VNF deployment increase. In addition, points of deployment (Pods) in a plurality of VNFs may be deployed on any board in the HA. Once a fault occurs on the board, all the VNFs deployed on the board are affected. As a result, impact of the fault increases, and consequential impact between the plurality of VNFs becomes worse. Therefore, how to better implement co-deployment of the plurality of VNFs in the HA has become an urgent problem to be resolved.

### SUMMARY

This application provides a method for deploying a virtualized network function and an apparatus, to better implement co-deployment of a plurality of VNFs in an HA.

According to a first aspect, a method for deploying a virtualized network function is provided. The method may be performed by a first network element, or may be performed by a chip or a circuit configured in a first network element. This is not limited in this application.

The method may include: The first network element sends a first request message to a container as a service CaaS manager, where the first request message is used to request to deploy a first virtual deployment unit VDU of a first VNF, the first request message includes requirement information of the first VDU, the requirement information of the first VDU includes requirement information that is of a node group and that is used to deploy the first VDU, and the node group is a set of one or more nodes in one host aggregate HA. The first network element receives a first request response message from the CaaS manager, where the first request response message indicates that the first VDU is successfully deployed, the first VDU is deployed on a first node, the first node belongs to a first node group, and the first node group meets the requirement information of the node group.

In the foregoing technical solution, a concept of introducing an HA to a node group may better meet a requirement for co-deployment (that is, resource sharing of a plurality of VNFs in the HA) of the plurality of VNFs in the HA. Specifically, during deployment of a VNF, a corresponding node label is planned or configured only in a corresponding node group, and the VNF completes scheduling and matching of a node only in the corresponding node group, thereby reducing management costs of VNF co-deployment. In addition, in this solution, a plurality of VNFs may be co-deployed in the HA by using different node groups. Compared with a conventional technology, this solution may reduce consequential impact between a plurality of VNFs caused by a board fault in the HA. Therefore, this solution can better implement co-deployment of the plurality of VNFs in the HA.

In some implementations of the first aspect, the requirement information of the node group is label requirement information of the node group.

For example, if information about a requirement that is of the first VDU and that is on the node group is to deploy the first VDU in a node group 2 in an HA 1, a value of a key/value pair corresponding to a label requirement that is of the first VDU and that is on an HA is HA:HA 1, and a value of a key/value pair corresponding to a label requirement that is of the first VDU and that is on a node group is NodeGroup:NodeGroup 2..

In some implementations of the first aspect, the requirement information of the first VDU further includes requirement information that is of an HA and that is used to deploy the first VDU.

In some implementations of the first aspect, the method further includes: The first network element obtains first information, where the first information indicates to create N nodes in the first node group, the N nodes include the first node, and N is a positive integer. The first network element sends a second request message to the CaaS manager, where the second request message is used to request to create the N nodes in the first node group. The first network element receives a second request response message from the CaaS manager, where the second request response message indicates that the N nodes are created.

In some implementations of the first aspect, the method further includes: The first network element obtains second information, where the second information indicates to create the first node group in a first HA. The first network element sends a third request message to the CaaS manager, where the third request message is used to request to create the first node group in the first HA. The first network element receives a third request response message from the CaaS manager, where the third request response message indicates that the first node group is created.

In some implementations of the first aspect, that the first network element obtains first information and that the first network element obtains second information include: The first network element receives the first information and the second information from a user.

In some implementations of the first aspect, that the first network element obtains first information and that the first network element obtains second information include: The first network element receives a fourth request message from a user, where the fourth request message is used to request to deploy the first VDU, the fourth request message includes the requirement information of the first VDU, and the requirement information of the first VDU further includes requirement information on a size of a resource necessary for deploying the first VDU. The first network element obtains information about an available resource of a node in each node group in one or more HAs, where the one or more HAs include the first HA. The first network element determines the first information and the second information based on the information about the available resource and the requirement information of the first VDU.

It should be noted that the first node group may be a currently existing node group. Similarly, the first node may be an existing node in the first node group. This is not limited in this application.

In some implementations of the first aspect, the first request message and the fourth request message are used to request to instantiate the first VDU, or the first request message and the fourth request message are used to request to deploy the first VDU for scale-out of the first VNF.

In some implementations of the first aspect, the first network element is a virtualized network function manager VNFM or a network functions virtualization orchestrator NFVO.

According to a second aspect, a method for deploying a virtualized network function is provided. The method may be performed by a CaaS manager, or may be performed by a chip or a circuit configured in a CaaS manager. This is not limited in this application.

The method may include: The container as a service CaaS manager receives a first request message from a first network element, where the first request message is used to request to deploy a first virtual deployment unit VDU of a first VNF, the first request message includes requirement information of the first VDU, the requirement information of the first VDU includes requirement information that is of a node group and that is used to deploy the first VDU, and the node group is a set of one or more nodes in one host aggregate HA. The CaaS manager deploys the first VDU on a first node based on the first request message, where the first node belongs to a first node group, and the first node group meets the requirement information of the node group. The CaaS manager sends a first request response message to the first network element, where the first request response message indicates that the first VDU is successfully deployed.

For beneficial effect of the second aspect, refer to the description in the first aspect. Details are not described herein again.

In some implementations of the second aspect, the requirement information of the node group is label requirement information of the node group.

In some implementations of the second aspect, the requirement information of the first VDU further includes requirement information that is of an HA and that is used to deploy the first VDU.

In some implementations of the second aspect, the method further includes: The CaaS manager receives a second request message from the first network element, where the second request message is used to request to create N nodes in the first node group. The CaaS manager sends a second request response message to the first network element, where the second request response message indicates that the N nodes are created.

In some implementations of the second aspect, the method further includes: The CaaS manager receives a third request message from the first network element, where the third request message is used to request to create the first node group in a first HA. The CaaS manager sends a third request response message to the first network element, where the third request response message indicates that the first node group is created.

In some implementations of the second aspect, the requirement information of the first VDU further includes requirement information on a size of a resource necessary for deploying the first VDU, and the method further includes: The CaaS manager creates the first node group in a first HA.

The CaaS manager creates N nodes in the first node group, where the N nodes include the first node, N is a positive integer, creation of the first node group and creation of the N nodes are determined by the CaaS manager based on information about an available resource of a node in each node group in one or more HAs and the requirement information of the first VDU, and the one or more HAs include the first HA. The CaaS manager sends third information to the first network element, where the third information includes information about the first node group and information about the N nodes.

In some implementations of the second aspect, the first request message and the fourth request message are used to request to instantiate the first VDU, or the first request message and the fourth request message are used to request to deploy the first VDU for scale-out of the first VNF.

In some implementations of the second aspect, the first network element is a virtualized network function manager VNFM or a network functions virtualization orchestrator NFVO.

According to a third aspect, a method for deploying a virtualized network function is provided. The method includes:

A first network element sends a first request message to a container as a service CaaS manager, where the first request message is used to request to deploy a first virtual deployment unit VDU of a first VNF, the first request message includes requirement information of the first VDU, the requirement information of the first VDU includes requirement information that is of a node group and that is used to deploy the first VDU, and the node group is a set of one or more nodes in one host aggregate HA. The container as a service CaaS manager receives the first request message from the first network element, and deploys the first VDU on a first node based on the first request message, where the first node belongs to a first node group, and the first node group meets the requirement information of the node group. The CaaS manager sends a first request response message to the first network element, where the first request response message indicates that the first VDU is successfully deployed. The first network element receives the first request response message from the CaaS manager.

For beneficial effect of the third aspect, refer to the description in the second aspect. Details are not described herein again.

In some implementations of the third aspect, the method further includes: The first network element obtains first information, where the first information indicates to create N nodes in the first node group, the N nodes include the first node, and N is a positive integer. The first network element sends a second request message to the CaaS manager, where the second request message is used to request to create the N nodes in the first node group. The CaaS manager receives the second request message from the first network element. The CaaS manager sends a second request response message to the first network element, where the second request response message indicates that the N nodes are created. The first network element receives the second request response message from the CaaS manager.

In some implementations of the third aspect, the method further includes: obtaining, by the first network element, second information, where the second information instructs to create a first node group in the first HA; sending, by the first network element, a third request message to a CaaS manager, where the third request message is used to request to create the first node group in the first HA; receiving, by the CaaS manager, a third request message from the first network element; and sending, by the CaaS manager, a third request response message to the first network element, where the third request response message indicates that creation of the first node group is completed; the first network element receives a third request response message from the CaaS manager.

According to a fourth aspect, a communication apparatus is provided. The apparatus is configured to perform the method according to the first aspect. Specifically, the apparatus may include a unit and/or a module configured to perform the method according to any one of the first aspect and the possible implementations of the first aspect, for example, a processing unit and/or a communication unit.

In an implementation, the apparatus is a first network element. When the apparatus is the first network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a first network element. When the apparatus is the chip, the chip system, or the circuit used in the first network element, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fifth aspect, a communication apparatus is provided. The apparatus is configured to perform the method according to the second aspect. Specifically, the apparatus may include a unit and/or a module configured to perform the method according to any one of the second aspect and the possible implementations of the second aspect, for example, a processing unit and/or a communication unit.

In an implementation, the apparatus is a CaaS manager. When the apparatus is the CaaS manager, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a CaaS manager. When the apparatus is the chip, the chip system, or the circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method according to any one of the first aspect and the possible implementations of the first aspect.

In an implementation, the apparatus is a first network element.

In another implementation, the apparatus is a chip, a chip system, or a circuit used in a first network element.

According to a seventh aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method according to any one of the second aspect and the possible implementations of the second aspect.

In an implementation, the apparatus is a CaaS manager.

In another implementation, the apparatus is a chip, a chip system, or a circuit used in a CaaS manager.

According to an eighth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions.

According to a ninth aspect, a computer-readable storage medium is provided. The computer-readable storage medium stores program code to be executed by a device, and the program code is used to perform the method according to any one of the first aspect or second aspect and the possible implementations of the first aspect or second aspect.

According to a tenth aspect, a computer program product including instructions is provided. When the computer program product runs on a computer, the computer is enabled to perform the method according to any one of the first aspect or second aspect and the possible implementations of the first aspect or second aspect.

According to an eleventh aspect, a chip is provided. The chip includes a processor and a communication interface. The processor reads, through the communication interface, instructions stored in a memory, to perform the method according to any one of the first aspect or second aspect and the possible implementations of the first aspect or second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the first aspect or second aspect and the possible implementations of the first aspect or second aspect.

According to a twelfth aspect, a communication system is provided. The communication system includes the communication apparatuses shown in the sixth aspect and the seventh aspect.

### BRIEF DESCRIPTION OF DRAWINGS

FIG. 1 is a schematic diagram of an NFV-based network architecture according to an embodiment of this application;
FIG. 2 is a schematic flowchart of VNF deployment according to this application;
FIG. 3 is a schematic flowchart of a method for manually managing a node group according to this application;
FIG. 4 is a schematic flowchart of a VNFM deployment-based method for automatically managing a node group in a first VNF instantiation process according to this application;
FIG. 5 is a schematic flowchart of a VNFM deployment-based method for automatically managing a node group in a first VNF scale-out process according to this application;
FIG. 6 is a schematic flowchart of an NFVO deployment-based method for automatically managing a node group in a first VNF instantiation process according to this application;
FIG. 7 is a schematic flowchart of a CaaS manager deployment-based method for automatically managing a node group in a first VNF instantiation process according to this application;
FIG. 8 is a schematic block diagram of a communication apparatus 100 according to this application; and
FIG. 9 is a schematic diagram of a structure of a communication apparatus 200 according to this application.

### DESCRIPTION OF EMBODIMENTS

The following describes technical solutions of embodiments of this application with reference to accompanying drawings.

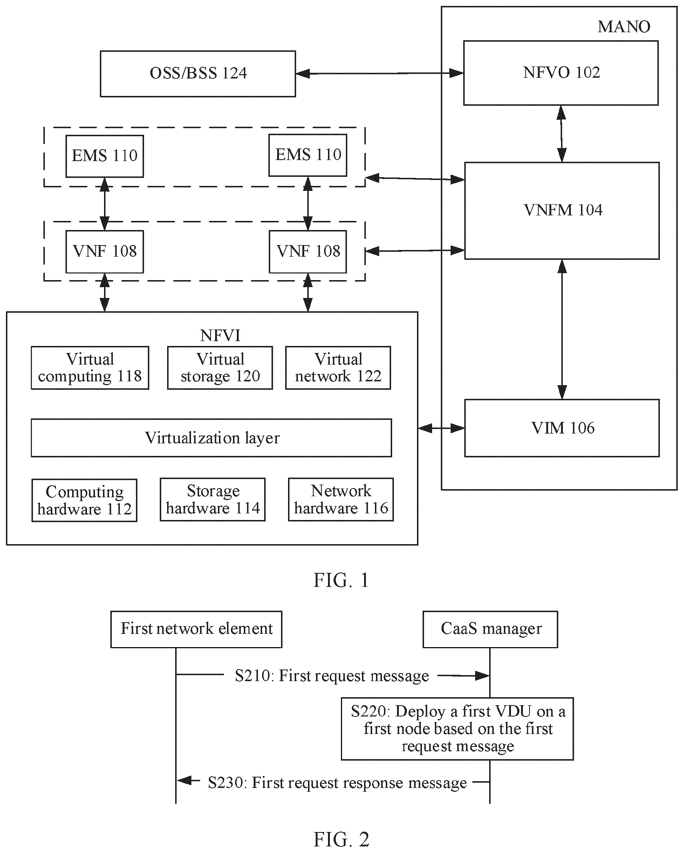

FIG. 1 is a schematic diagram of an NFV-based network architecture according to an embodiment of this application. As shown in FIG. 1, the network architecture includes a network functions virtualization orchestrator (Network Functions Virtualization Orchestrator, NFVO) 102, a virtualized network function manager (Virtualized Network Function Manager, VNFM) 104, a virtualized infrastructure manager (Virtualized Infrastructure Manager, VIM) 106, a network functions virtualization infrastructure (Network Functions Virtualization Infrastructure, NFVI), a virtualized network function (Virtualized Network Function, VNF) 108, and an element management system (Element Manager System, EMS) 110. The NFVO 102, the VNFM 104, and the VIM 106 belong to management and orchestration (Management and Orchestration, MANO) of an NFV system. Related functions of the MANO may be implemented by hardware, or may be implemented by software. The following briefly describes the foregoing network elements.

The NFVO 102 implements management of a network service descriptor (Network Service Descriptor, NSD), a virtualized network function descriptor (Virtualized Network Function Descriptor, VNFD), and a virtualized network function forwarding graph (Virtualized Network Function Forwarding Graph, VNFFG), implements lifecycle management of a network service (Network Service, NS), and implements a global resource view function. The NFVO 102 is mainly responsible for lifecycle management of a virtualization service, allocation and scheduling of a virtual resource in the NFVI, and the like. The NFVO 102 may communicate with one or more VNFMs 104, to perform a resource-related request, send configuration information to the VNFM 104, and collect status information of the VNF 108. In addition, the NFVO 102 may also communicate with the VIM 106, to perform resource allocation and/or reservation, and exchange virtualized hardware resource configuration and status information.

The VNFM 104 is responsible for lifecycle management of one or more VNFs 108, such as instantiating (instantiating), updating (updating), querying, scaling (scaling), or terminating (terminating) the VNF 108. The VNFM 104 may communicate with the VNF 108 for VNF lifecycle management and exchange of configuration and status information. There may be a plurality of VNFMs 104 in an NFV architecture, and the plurality of VNFMs 104 are responsible for lifecycle management of different types of VNFs.

The VIM 106, that is, a virtualized infrastructure manager, controls and manages interaction between the VNF 108 and computing hardware 112, storage hardware 114, network hardware 116, virtual computing 118, a virtual storage 120, and a virtual network 122. For example, the VIM 106 executes a resource management function, including infrastructure resource management, allocation (for example, adding a resource to a virtual container), and a running function (for example, collecting fault information of the NFVI). The VNFM 104 and the VIM 106 may communicate with each other, to request resource allocation and exchange virtualized hardware resource configuration and status information.

The VNF 108, also referred to as a virtualized network element, corresponds to a physical network function in a conventional non-virtualized network. Functional behavior and a status that are of a network function are irrelevant to whether the network function is virtualized. Universal hardware such as an x86 processor, and a virtualization technology are used to support software processing in implementing many functions, thereby reducing high device costs of a network.

The EMS 110 is a system for configuring and managing a device in a conventional telecommunication system. In an NFV architecture, the EMS 110 may also be used for configuring and managing a VNF, and initiating a lifecycle management operation on a VNFM, for example, instantiating a new VNF.

The NFVI, that is, an NFV infrastructure layer, includes a hardware component, a software component, or a combination thereof, to establish a virtualized environment, and deploy, manage, and implement the VNF 108. A hardware resource and a virtualization layer are used to provide virtualized resources, such as a virtual machine and a virtual container in another form, for the VNF 108. The hardware resource includes the computing (computing) hardware 112, the storage hardware 114, and the network hardware 116. Optionally, resources of the computing hardware 112 and the storage hardware 114 may be centralized. The virtualization layer in the NFVI may abstract the hardware resource, and decouple the VNF 108 from an underlying physical network layer.

An OSS/BSS 124 supports various end-to-end telecommunication services. Management functions supported by the OSS include: network configuration, service provision, fault management, and the like. The BSS processes an order, payment, income, or the like, and supports product management, order management, profit management, and customer management.

For ease of understanding of this application, before a method provided in this application is described, concepts in this application are briefly described first.
1. Cloud computing (cloud computing) is an internet-based new computing method that provides on-demand computing for individual users and business users by using heterogeneous and autonomous services on the internet. The cloud computing includes three layers of services: infrastructure as a service (IaaS), platform as a service (platform as a service, PaaS), and software as a service (software as a service, SaaS). PaaS is a business model in which a server platform is provided as a service, and actually means that a software development and research platform is provided as a service to a user in a SaaS mode.
2. A container (container) is an operating system-level virtualization technology that isolates different processes by using an operating system isolation technology. The technology is used to bundle an application and all necessary files of the application into a runtime environment. As a unit, the container may be easily moved and run on any operating system in any environment.
3. A container as a service (container as a service, CaaS) is a specific type of PaaS.
4. Kubernetes (K8S) is a container cluster management system open-sourced by Google (Google). The system is built on a docker technology and provides a complete set of functions, such as resource scheduling, deployment and running, service discovery, and scale-in/- out, for containerized applications. In other words, K8S is a cluster responsible for automatic operations and maintenance management of a plurality of docker programs. Kubernetes may be regarded as a container technology-based mini-CaaS (mini-CaaS) manager.
5. A virtual machine (virtual machine, VM) container is a containerized system deployed based on a virtual machine, including a virtualized infrastructure, a containerized management platform, and a network element VNF. The VM is a virtual device obtained through simulation on a physical device by using virtual machine software. For an application program running on the virtual machine, the virtual machine works like a real physical device. An operating system and application programs may be installed on the virtual machine, and the virtual machine may further access network resources.
6. A bare metal (bare metal) container is a containerized system deployed on a bare metal server, including a bare metal infrastructure, a containerized management platform, and a network element VNF.
7. A host aggregate (host aggregate, HA) is a logical concept in an OpenStack deployment model, and represents a group of computing boards and related metadata. Generally, a group of boards with a same architecture (such as x86 or ARM) and a homogeneous specification (such as 2*32 cores or 2*64 cores) are planned in an HA system. In this application, the board may also be understood as a host (host), and the board and the host may be replaced with each other in this application.
8. A node (Node) is a worker node used to deploy an application or a service. The node may be a virtual machine VM or a bare metal host. A K8S node is the VM in a virtual machine container scenario and is the host in a bare metal container scenario. It may be understood that, when this embodiment is applied to another container management platform or system, the node may be understood as a worker node in a corresponding platform or system. This is not limited herein.
9. A point of deployment (Pod) is a smallest or simplest basic unit created or deployed in K8S. The Pod corresponds to an application instance and is deployed on a node. The Pod may include one or a group of containers that share a resource. A relationship among an HA, a node, and a Pod is as follows: The HA may include a plurality of nodes, and a plurality of Pods may be deployed on one node.
10. A VNFD template is a template file used to deploy a VNF. The VNFD template can reference a containerized deployment extension template, for example, a K8S template and a Helm template.
   The VNFD template includes VNF information and VNF deployment unit information. The VNF information may also be understood as a VNF attribute, for example, includes a VNF type. The VNF deployment unit information may be understood as a VNF deployment unit attribute, for example, includes a quantity of deployment units and an attribute requirement that is of the deployment unit and that is on a to-be-deployed-on node (or a label requirement that is of the deployment unit and that is on the to-be-deployed-on node).
11. A virtual deployment unit (virtual deployment unit, VDU) is based on a VNFD/ containerized deployment template file (defined by ETSI). In a virtual machine scenario, a "VDU object" refers to a VM. In a container scenario, a "VDU object" may refer to a Pod. Further, when the VDU is a Pod, a parameter in a VNFD template may indicate whether the VDU is a virtual machine container or a bare metal container.
   It should be understood that the VDU is a deployment unit of a VNF, and a process of instantiating the VNF is to deploy one or more deployment units of the VNF on a corresponding node. A type of the deployment unit of the VNF is not limited in embodiments of this application.
12. A label (label) is also referred to as a node label and is used to describe a node attribute. The node label includes, for example, a key/value pair (KEY/VALUE) attached to a node.
13. Huge page (huge page): In a paged virtual memory, a virtual storage space and a physical primary memory space each are divided into pages of a fixed size, and memory is allocated to a thread usually by pages. For example, if a page size is 4 KB (for example, a default page size of the Linux operating system is 4 KB), a 4 GB storage space needs 4 GB/4 KB = 1M records, that is, 1M pages. However, some pages may be set to a very large size, for example, 1 GB or even dozens of GB, due to a scenario requirement. These pages are referred to as huge pages.
14. Non-uniform memory access (non-uniform memory access, NUMA) is a computer memory design used for a multiprocessor, where memory access time depends on a memory location of a processor. Under the NUMA, a processor accesses a local memory of the processor faster than a non-local memory (memory local to another processor or memory shared between processors). For example, in this application, Mem indicates memory, and FreeMem (100 GB) indicates remaining 100 GB memory.
15. A virtual central processing unit (central processing unit, CPU) is a CPU virtualized by using a virtualization technology. In this application, a virtual CPU may be referred to as a vCPU. Generally, a physical core of an x86 server is virtualized into two vCPUs, and a physical core of an ARM server is virtualized into one vCPU. For example, in this application, FreeCPU (40v) indicates that there are 40 remaining vCPUs.

For ease of understanding of embodiments of this application, the following describes a containerized deployment process of a VNF.

A possible specific VNF deployment process is shown as follows:
Step 1: Create a node and configure a node label by using a containerized deployment platform.
   In a virtual machine container scenario, a Pod scheduling object VM dynamically creates the node and configures the label as the VNF runs. In a bare metal container scenario, a Pod scheduling object host plans in advance and configures the label.
Step 2: Use a VNFD containerized deployment template to describe a quantity of Pods that need to be deployed and a label requirement that is of the Pod and that is on a node on which the Pod is to be deployed.
Step 3: A CaaS manager schedules each Pod to a matched node based on a label requirement that is of each Pod and that is on the to-be-deployed-on node.

For example, a label requirement that is of a Pod with a name (name) of nginx and that is on a to-be-deployed-on node is described in the following VNFD containerized deployment template:

```
         apiVersion: v1
         kind: Pod
         metadata:
          name: nginx
         spec:
          affinity:
           nodeAffinity:
             requiredDuringSchedulingIgnoredDuringExecution:
              nodeSelectorTerms:
              - matchExpressions:
               - key1: disktype
                operator: In
                values:
                - ssd
                - normal
               - key2: mem
                operator: In
                values:
                - 2M
                           - mem
          containers:
          - name: nginx
           image: nginx
           imagePullPolicy: IfNotPresent
```

It can be learned that in the foregoing template, the Pod with the name of nginx needs to be scheduled to a node that meets a match expression (matchExpressions). The match expression includes two labels, each label corresponds to a key/value pair, and the two key-value pairs are respectively a key/value pair key1/value and a key/value pair key2/value.

Based on the current label requirement of the Pod and a node label matching mechanism, a node that meets a requirement for deploying the Pod has the following characteristics:
1. On the node, there are both a label whose KEY has a value of disktype and a label whose KEY has a value of mem.
2. On the node, a value of VALUE corresponding to a label whose KEY has a value of disktype is either of {ssd, normal}.
3. On the node, a value of VALUE corresponding to a label whose KEY has a value of mem is either of {2M, mem}.

VNF deployment in the bare metal container scenario is used as an example. Currently, the VNF deployment has, but not limited to, the following problems:
(1) In the bare metal container scenario, the VNF deployment is implemented by specifying a label requirement that is of a Pod in a VNF and that is on a to-be-deployed-on node. A quantity of boards and resources for the VNF deployment are specified and fixed. Therefore, if one or more boards are faulty after the VNF deployment is completed, the Pod deployed on the board is forcibly terminated. As a result, the VNF cannot be successfully deployed.
(2) During the VNF deployment in the bare metal container scenario, a label needs to be set for a corresponding node to facilitate distinction during resource control and scheduling (for example, when a Pod in the VNF is deployed, a label of a node needed by the Pod is specified for the CaaS manager, and the CaaS manager schedules the Pod to the node that matches the label). In actual label setting, each VNF can independently plan or configure a corresponding node label. In other words, the VNF considers a board as a private node and adds a private label (or attribute). Pods of different VNFs may be deployed on one node, and Pods in a same VNF may be deployed on a plurality of nodes. In this way, for a large commercial site (there may be hundreds or thousands of nodes), as a quantity of deployed VNFs increases, a quantity of labels on a node increases, and labels of different VNFs on a same node stack on each other, increasing coupling between a board at an NFVI layer and a resource node at a PaaS layer, and increasing management costs of the VNF deployment.
(3) During the VNF deployment in the bare metal container scenario, one node corresponds to one board (host). To implement resource sharing, an HA model is generally used, and node labels are planned in advance. Each VNF directly shares a board resource in an HA and deploys a Pod of the VFN based on the node label. If different VNFs are deployed in a same HA, Pods to which these VNFs belong are deployed in the same HA in a hybrid manner. In other words, any Pod in any of these VNFs may be deployed on any board in the HA. This may bring, but not limited to, the following problems: First, when more different VNFs are co-deployed on a same board, the Pods to which the VNFs belong may contend for a computing resource, a storage resource, a bandwidth resource, and another resource on the board. If a board fault occurs, all VNF instances deployed on the board are affected. As a result, impact of the fault increases, and consequential impact between a plurality of VNFs becomes worse. In addition, Pods are classified into service Pods and DaemonSet Pods (that is, a daemon process that provides a service for the service Pods). According to a principle of deploying a DaemonSet Pod, the DaemonSet Pod needs to be deployed on all boards in the HA by default, provided that the Pod in the VNF matches a label of the board in the HA (regardless of which board or boards the Pod in the VNF is actually deployed on). In this case, a quantity of the DaemonSet Pods multiplies when more VNFs are deployed in the HA. As a result, the quantity of the DaemonSet Pods is a plurality of times a quantity of the service Pods that the DaemonSet Pods serve, causing a resource waste.

In view of this, this application provides a method that can effectively resolve the foregoing technical problem.

FIG. 2 is a schematic flowchart of a VNF deployment method according to this application. The method includes the following steps.

S210: A first network element sends a first request message to a container as a service CaaS manager, where the first request message is used to request to deploy a first VDU of a first VNF, the first request message includes requirement information of the first VDU, the requirement information of the first VDU includes requirement information that is of a node group and that is used to deploy the first VDU. Correspondingly, the CaaS manager receives the first request message from the first network element.

For example, the first network element is a VNFM or an NFVO. It should be noted that, when the first network element is the NFVO, the NFVO and the CaaS manager need to perform information transmission via the VNFM.

It should be understood that the node group (a group of nodes under an HA, Node Group) is a set of one or more nodes in one HA. For example, the node group may be obtained through division by a device vendor in the HA as needed.

Optionally, a quantity of VNFs co-deployed in one node group may be specified, to limit a degree of mutual impact between a plurality of VNFs. For example, a maximum of five VNFs can be co-deployed in a node group.

Optionally, VNFs that have a same hardware, networking, and co-deployment requirement may be deployed in a same node group, and VNFs that have different requirements may be deployed in different node groups.

Optionally, to avoid mutual planning impact between different resource pools, one node belongs to only one node group, and one node group belongs to only one HA.

It may be understood that the requirement or the requirement information in this embodiment of this application may be understood as a deployment requirement. Optionally, the requirement information of the first VDU further includes one or more of the following requirement information: a requirement that is of an HA and that is used to deploy the first VDU, a size of a resource necessary for deploying the first VDU, an architecture of a node on which the first VDU is deployed, a maximum value of a quantity of VNF instances that can be co-deployed in a node group in which the first VDU is deployed, and remaining huge page memory of a node on which the first VDU is deployed. For example, the requirement that is of the HA and that is used to deploy the first VDU is that the first VDU is expected to be deployed on a node in an HA 1, requirement information on the size of the resource necessary for deploying the first VDU is 8v&200G, and a requirement that is of the first VDU and that is on the architecture of the node on which the first VDU is deployed is that the first VDU is expected to be deployed on a node whose architecture is x86.

For example, that the first request message is used to request to deploy a first VDU of a first VNF is specifically that the first request message is used to request to instantiate the first VDU. It may also be understood that the first request information is used to request to instantiate the first VNF, and the first VDU is one of one or more VDUs for instantiation of the first VNF.

For example, that the first request message is used to request to deploy a first VDU of a first VNF is specifically that the first request message is used to request to deploy the first VDU for scale-out of the first VNF. It may also be understood that the first request information is used to request to scale out the first VNF, and the first VDU is one of one or more VDUs deployed for scale-out of the first VNF.

In a possible implementation, an actual deployment requirement that is of the first VNF and that is on a node group may point to a specific node group name. For example, the actual deployment requirement that is of the first VNF and that is on the node group is that a quantity of VDU 1 instances is 2, the two VDUs 1 need to be deployed in a node group 1 in the HA 1, and a size requirement on a needed resource is 20v&200G; and a quantity of VDU 2 instances is 3, the three VDUs 2 need to be deployed in a node group 2 in the HA 1, and a size requirement on a needed resource is 30v&300G. For another example, the actual deployment requirement that is of the first VNF and that is on the node group is that a quantity of VDU 1 instances is 2, a quantity of VDU 2 instances is 3, the first VNF is deployed in a node group 2 in the HA 1, and an overall requirement on a needed resource is 140v&380G.

Optionally, the specific node group name may be indicated by using information about a label requirement that is of the first VDU in the first VNF and that is on the node group. For example, if the information about the requirement that is of the first VDU and that is on the node group is to deploy the first VDU in the node group 2 in the HA 1, a value of a key/value pair corresponding to a label requirement that is of the first VDU and that is on an HA is HA:HA 1, and a value of a key/value pair corresponding to a label requirement that is of the first VDU and that is on a node group is NodeGroup:NodeGroup 2.

In another possible implementation, an actual deployment requirement that is of the first VNF and that is on a node group may not point to a specific node group name. For example, the actual deployment requirement that is of the first VNF and that is on the node group is that a quantity of VDU 1 instances is 2, a quantity of VDU 2 instances is 3, the first VNF is deployed in one node group, an overall requirement on a resource needed is 140v&380G, a maximum value of a quantity of VNF instances that can be deployed in a node group in which the first VNF is deployed is 5, and the like.

S220: The CaaS manager deploys the first VDU on a first node based on the first request message. The first node is located in a first node group, and the first node group meets requirement information that is of the node group and that is used to deploy the first VDU.

It should be understood that the first node group may be a currently existing node group, or may be a node group newly added according to the deployment requirement of the first VNF. Similarly, the first node may be an existing node in the first node group, or may be a node newly added in the first node group according to the deployment requirement of the first VNF. This is not limited in this application.

It should be further understood that, when a new node group needs to be created, a new HA may be separately created according to an actual requirement, and a new node is created in the new HA, or a new node group object is created in an existing HA object.

For example, if a deployment condition of a currently existing node group meets a requirement of the first VNF, an operator may not need to create a new node group.

For example, if a deployment condition of a currently existing node group cannot meet a requirement of the first VNF, for example, there is no node group of a proper size, or a quantity of VNF instances deployed on an existing node group exceeds a quantity of VNF instances that can be co-deployed, a request to create a new node group needs to be initiated to the CaaS manager.

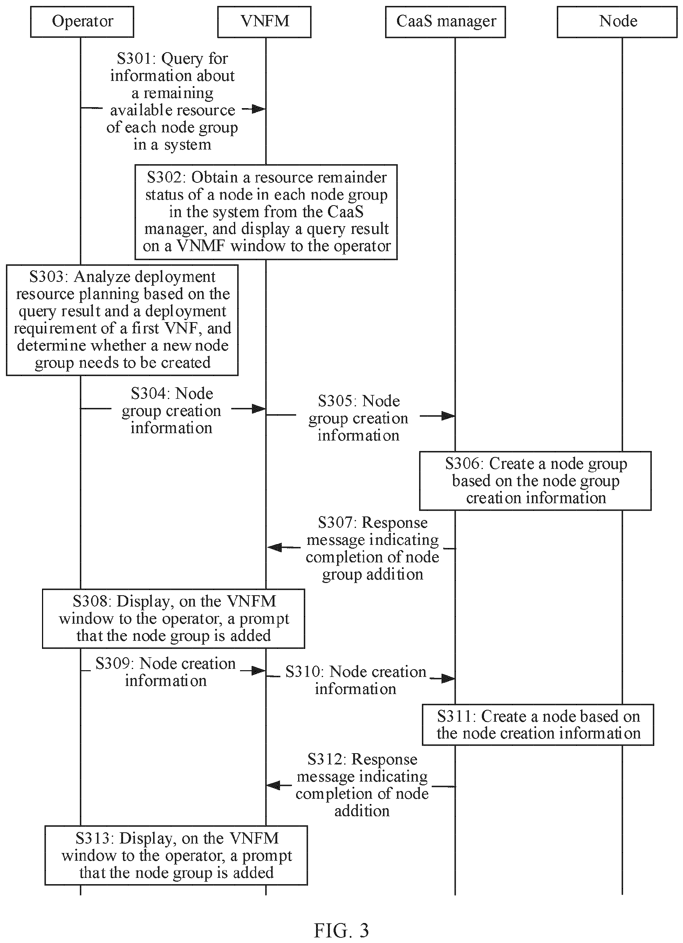

Optionally, creation of the new node group may be manually managed by an operator. For a possible implementation, refer to the descriptions in FIG. 3. Details are not described herein.

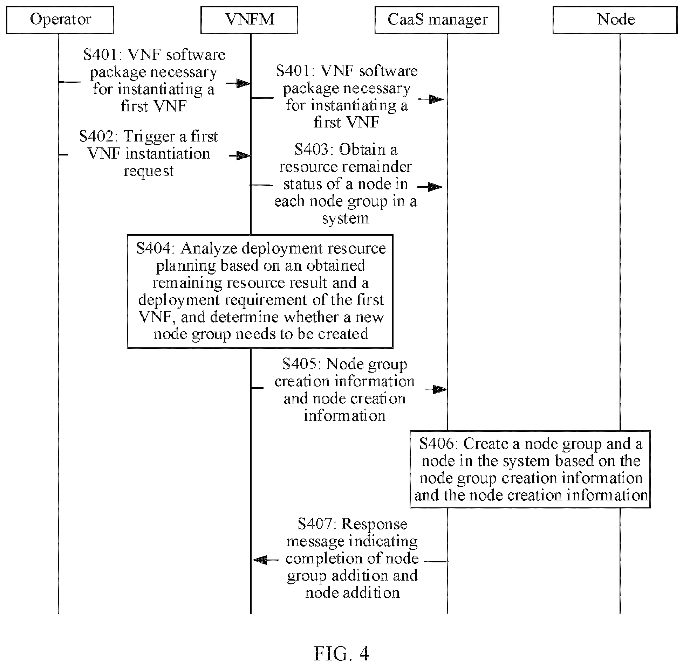

Optionally, automatic deployment may be performed based on the first network element when a new node group is created. For a possible implementation, refer to the descriptions in FIG. 4 to FIG. 6. Details are not described herein.

It should be understood that the CaaS manager includes two network elements: a container cluster management (container cluster manager, CCM) network element and a container infrastructure service management (container infrastructure service manager, CISM) network element. For example, the first network element may send the first request message to the CaaS manager-CCM. For another example, the first network element may initiate, to the CaaS manager-CISM, a request to create a new node group. In the following steps related to interaction between the VNFM and the CaaS manager, a specific network element that is in the CaaS manager and that interacts with the VNFM is determined based on functions of the two network elements. This is not specifically distinguished in this application.

S230: The CaaS manager sends a first request response message to the first network element. The first request response message indicates that the first VDU is successfully deployed. Correspondingly, the first network element receives the first request response message from the CaaS manager.

Specifically, when the first network element determines that all VDUs in the first VNF that needs to be deployed (for example, instantiated or scaled out) are successfully deployed, it is considered that the first VNF is successfully deployed, and it indicates that a task of deploying the first VNF is completed.

In the foregoing technical solution, a concept of a node group is introduced into an HA, so that a resource management capability and resource utilization of VNF deployment can be improved, and a requirement for co-deployment of a plurality of VNFs in the HA can be implemented. This is particularly beneficial to a bare metal container scenario. Specifically, for the VNF deployment problem (1), a VNF deployed in an HA shared resource pool is not fixedly bound to a physical board. When a board on which a Pod is deployed is faulty, the Pod on the board may be migrated to a matched node in another node group, so that capabilities such as cloud-based scheduling and free migration in a virtual machine container are fully inherited. For the VNF deployment problem (2), during VNF deployment, a corresponding node label is planned or configured only in a corresponding node group, and a VNF completes node scheduling and matching in the corresponding node group, thereby fully inheriting a layered operations and maintenance capability of a virtual machine container, and reducing coupling between a board at an NFVI layer and a resource node at a PaaS layer. For the VNF deployment problem (3), VNFs are co-deployed or independently deployed in the node group in the HA as needed, effectively reducing a quantity of DaemonSet Pods and improving overall resource utilization.

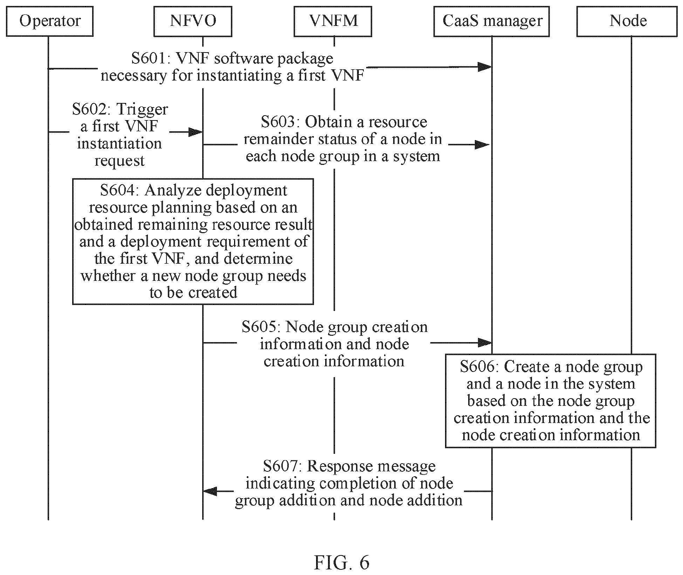

With reference to FIG. 3 to FIG. 6, the following uses an example to describe a possible implementation process of creating a new node group. For ease of description, an example in which a first network element is a VNFM is used for description in FIG. 3 to FIG. 5, and an example in which a first network element is an NFVO is used for description in FIG. 6.

FIG. 3 is a schematic flowchart of a method for manually managing a node group according to this application. The process includes the following steps.

S301: An operator queries for information about a remaining available resource of each node group in a system by using a VNFM window.

For example, when a first network element is a VNFM, the VNFM may directly interconnect to a CaaS manager, and obtain a list of node groups in the system and a resource remainder status of a node in each node group from the CaaS manager.

For example, when a first network element is an NFVO, the NFVO may interconnect to the CaaS manager via a VNFM, to obtain a list of node groups in the system and a resource remainder status of a node in each node group from the CaaS manager.

S302: The VNFM obtains the resource remainder status of the node in each node group in the system from the CaaS manager, and displays a query result on the VNFM window to the operator.

S303: The operator analyzes deployment resource planning based on the query result and a deployment requirement of a first VNF, and determines whether a new node group needs to be created.

For example, a VNF-001 and a VNF-002 need to be deployed. A deployment requirement of the VNF-001 and the VNF-002 is that the VNF-001 needs to be co-deployed with another VNF in a node group 1 in an HA 1, and a total resource necessary for deploying the VNF-001 is 120v&250G. In addition, the to-be-deployed VNF-002 needs to be independently deployed in the HA 1, and a total resource needed is 140v&380G. After query, it can be learned that a status of the remaining resource in the HA 1 is shown in Table 1, where NodeBMCIP is a baseboard management controller (baseboard management controller, BMC) IP address of a corresponding board. Analysis is performed with reference to an existing remaining resource in the node group 1 in the HA 1. An example in which a resource of a board is 80v&200G is used. The operator determines that for the to-be-deployed VNF-001, at least one board needs to be added in the node group 1 in the HA 1 (in other words, at least one node needs to be added in the node group 1), and for the to-be-deployed VNF-002, a node group (for example, a node group 2) needs to be separately created in the HA 1, and at least two boards need to be added in the node group 2 (in other words, at least two nodes need to be added in the node group 2).

**Table 1**

| NodeBMCIP | NodeGroup | HA | FreeCPU/vCPU | FreeMem/GB |
|---|---|---|---|---|
| 10.11.12.1 | NodeGroup 1 | HA 1 | 20 | 30 |
| 10.11.12.2 | NodeGroup 1 | HA 1 | 30 | 40 |

Optionally, when determining that no new node group needs to be added, the VNFM skips remaining steps and performs the steps in FIG. 2.

Optionally, when determining that a new node group needs to be added, the VNFM proceeds to perform S304.

S304: The operator enters node group creation information on the VNFM window based on an analysis result.

Based on the deployment resource planning that is determined by the operator in S303 and that corresponds to the to-be-deployed VNF-001 and VNF-002, the node group creation information includes adding the node group 2 in the HA 1.

S305: The VNFM sends the node group creation information to the CaaS manager. Correspondingly, the CaaS manager receives the node group creation information from the VNFM.

S306: The CaaS manager creates a node group based on the node group creation information.

It should be understood that, for ease of subsequent operations and maintenance, when creating a node group, the CaaS manager may configure some public attributes for an HA and a node group that may be created, so that a subsequently added node automatically inherits related attributes of the HA and the node group. For example, public attributes such as an architecture and an HA label (a value of a corresponding key/value pair is HA:HA 1) are configured in the HA 1, and public attributes such as a node group label (a value of a corresponding key/value pair is NodeGroup:NodeGroup 2) are configured in the node group 2.

For example, the node group creation information includes adding the node group 2 in the HA 1, and the HA 1 in which the node group 2 is added is shown in Table 2.

**Table 2**

| NodeBMCIP | NodeGroup | HA | FreeCPU/vCPU | FreeMem/GB |
|---|---|---|---|---|
| 10.11.12.1 | NodeGroup 1 | HA1 | 20 | 30 |
| 10.11.12.2 | NodeGroup 1 | HA1 | 30 | 40 |
| -- | NodeGroup 2 | HA 1 | -- | -- |

S307: The CaaS manager sends a response message indicating completion of node group addition to the VNFM. Correspondingly, the VNFM receives the response message indicating completion of node group addition from the CaaS manager.

S308: The VNFM displays, on the VNFM window to the operator, a prompt that the node group is added.

S309: The operator enters node creation information on the VNFM window based on the analysis result.

Based on the deployment resource planning that is determined by the operator in S303 and that corresponds to the to-be-deployed VNF-001 and VNF-002, the node creation information includes: adding a board in the node group 1 in the HA 1, and adding two boards in the node group 2 that is newly added in the HA 1.

S310: The VNFM sends the node creation information to the CaaS manager. Correspondingly, the CaaS manager receives the node creation information from the VNFM.

S311: The CaaS manager creates a node based on the node creation information.

For example, the node creation information includes: adding a board in the node group 1 in the HA 1, and adding two boards in the node group 2 that is newly added in the HA 1. A resource status in the HA 1 after board addition is shown in Table 3.

**Table 3**

| NodeBMCIP | NodeGroup | HA | FreeCPU/vCPU | FreeMem/GB |
|---|---|---|---|---|
| 10.11.12.1 | NodeGroup 1 | HA 1 | 20 | 30 |
| 10.11.12.2 | NodeGroup 1 | HA 1 | 30 | 40 |
| 10.11.12.3 | NodeGroup 1 | HA 1 | 80 | 200 |
| 10.11.12.4 | NodeGroup 2 | HA 1 | 80 | 200 |
| 10.11.12.5 | NodeGroup 2 | HA 1 | 80 | 200 |

The board in the HA 1 may inherit the public attributes of the HA 1. The board in the node group 2 may inherit the public attributes of the HA 1 and the public attributes of the node group 2. For example, a label of the board in the node group 2 is HA:HA 1; NodeGroup:NodeGroup 2

S312: The CaaS manager sends a response message indicating completion of node addition to the VNFM. Correspondingly, the VNFM receives the response message indicating completion of node addition from the CaaS manager.

S313: The VNFM displays, on the VNFM window to the operator, a prompt that the node is added.

FIG. 4 is a schematic flowchart of a VNFM deployment-based method for automatically managing a node group in a first VNF instantiation process according to this application. The process includes the following steps.

S401: An operator sends, to a CaaS manager by using a VNFM window, a VNF software package necessary for instantiating a first VNF. Correspondingly, the CaaS manager receives the VNF software package that is uploaded by the operator and that is necessary for instantiating the first VNF.

The VNF software package includes a deployment software package (including a container image file) and a containerized deployment template. The containerized deployment template may be understood as an original containerized deployment template that is set before delivery. After the operator enters, on the VNFM window based on the original containerized deployment template, a value of a related parameter given in the template, a VNFM may obtain a first VNFD template used to deploy the first VNF. The first VNFD template includes a quantity of VDU instances that need to be deployed in the first VNF and requirement information on deploying these VDUs. Requirement information of each VDU includes requirement information that is of a node group and that is used to deploy the VDU.

S402: The operator triggers a first VNF instantiation request by using the VNFM window. Correspondingly, the VNFM receives the first VNF instantiation request from the operator.

It should be understood that, in a process of triggering first VNF instantiation, the software package uploaded in the foregoing step needs to be used. During actual deployment of the first VNF, a value in the first VNFD template in S401 may be replaced or modified based on a deployment site and an actual situation of network design planning, to indicate actual requirement information of the first VNF.

It should be further understood that whether a plurality of VDU instances of one VNF are deployed in one node group of one HA or in a plurality of node groups of one HA may be determined based on an actual deployment requirement. This is not limited in this application.

Optionally, an actual deployment requirement that is of the first VNF and that is on a node group may point to a specific node group name, or an actual deployment requirement that is of the first VNF and that is on a node group may not point to a specific node group name. For details, refer to the description in S201. Details are not described herein again.

S403: The VNFM obtains a resource remainder status of a node in each node group in a system from the CaaS manager.

S404: The VNFM analyzes deployment resource planning based on an obtained remaining resource result and the deployment requirement of the first VNF, and determines whether a new node group needs to be created.

A process of determining whether a new node group needs to be created is basically the same as the manual management described in S303. The only difference is that this embodiment is implemented based on software automation. Details are not described herein again.

Optionally, when determining that no new node group needs to be added, the VNFM performs the steps in FIG. 2, where the first request message is used to request to instantiate the first VNF.

Optionally, when determining that a new node group needs to be added, the VNFM proceeds to perform S405.

S405: The VNFM sends node group creation information and node creation information to the CaaS manager. Correspondingly, the CaaS manager receives the node group creation information and the node creation information from the VNFM.

S406: The CaaS manager creates a node group and a node in the system based on the node group creation information and the node creation information.

S407: The CaaS manager sends a response message indicating completion of node group addition and node addition to the VNFM. Correspondingly, the VNFM receives the response message indicating completion of node group addition and node addition from the CaaS manager.

For S405 to S407, refer to the descriptions in S305 to S307 and S310 to S312. Details are not described herein again.

Then, the VNFM may perform the steps in FIG. 2, where the first request message is used to request to instantiate the first VNF.

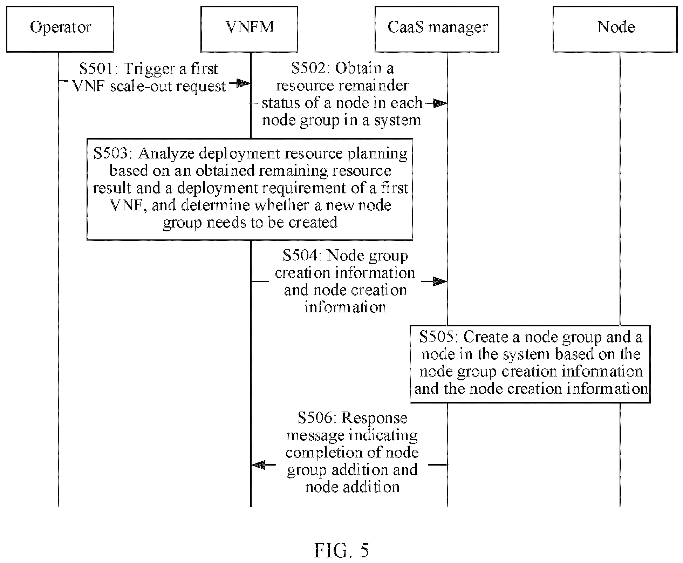

FIG. 5 is a schematic flowchart of a VNFM deployment-based method for automatically managing a node group in a first VNF scale-out process according to this application. It may be understood that the method may be considered as an operation performed after a first VNF is instantiated. The process includes the following steps.

S501: An operator triggers a first VNF scale-out request by using a VNFM window.

It should be understood that, in a process of triggering first VNF scale-out (for example, deployment of a first VDU for scale-out is used as an example), the operator updates information about a requirement that is of the first VDU and that is on a to-be-deployed-on node as needed. A label requirement that is of the first VDU and that is on the to-be-deployed-on node includes a label requirement that is of the first VDU and that is on a node group in which the to-be-deployed-on node is located.

It should be understood that, for a scale-out operation for a VDU that has not yet been instantiated, a label requirement that is of the VDU and that is on the to-be-deployed-on node may need to be configured. The deployment requirement may be implemented by modifying or configuring a value of a corresponding parameter in an original containerized deployment template on the VNFM window.

It should be further understood that, for a scale-out operation of a VDU that has been instantiated, in an instantiation phase, a label requirement that is of the VDU and that is on the to-be-deployed-on node has been modified or reconfigured based on a deployment site and an actual situation of network design planning. Therefore, when no resource pool is adjusted or scaled out, for general scale-out, the label requirement that is of the VDU and that is on the to-be-deployed-on node does not need to be modified (in other words, the value that is of the corresponding parameter of the VDU and that is entered on the VNFM window does not need to be modified). For a scale-out scenario in which a new resource pool needs to be scaled out, for example, for a scale-out request for expanding the VDU that has been instantiated from an original node group 1 to a node group 2, the label requirement that is of the VDU and that is on the to-be-deployed-on node needs to be further refreshed. For example, a label requirement that is of the VDU and that is on a node group to which the to-be-deployed-on node belongs needs to be refreshed.

For S502 to S506, refer to the descriptions in S403 to S407. Details are not described herein again.

Then, the VNFM may perform the steps in FIG. 2, where the first request message is used to request to deploy the first VDU for scale-out of the first VNF.

FIG. 6 is a schematic flowchart of an NFVO deployment-based method for automatically managing a node group in a first VNF instantiation process according to this application. The process includes the following steps.

It should be understood that a difference between this embodiment and the embodiment corresponding to FIG. 4 lies in that, in the embodiment corresponding to FIG. 4, an example in which the first network element is a VNFM is used for description, and in this embodiment, an example in which the first network element is an NFVO is used for description. It should be further understood that, when the first network element is the NFVO, the NFVO and a CaaS manager need to perform information transmission via the VNFM.

S601: An operator sends, to the CaaS manager by using an NFVO window, a VNF software package necessary for instantiating a first VNF. Correspondingly, the CaaS manager receives the VNF software package that is uploaded by the operator and that is necessary for instantiating the first VNF.

It should be further understood that, when the first network element is the NFVO, the NFVO and the CaaS manager need to perform information transmission via the VNFM. Specifically, that an operator sends, to the CaaS manager by using an NFVO window, a VNF software package necessary for instantiating a first VNF interface indicates that the operator sends the VNF software package to the VNFM by using the NFVO window, and the VNFM sends the VNF software package to the CaaS manager after receiving the VNF software package. An interaction process between the NFVO and the CaaS manager is not described below again.

The VNF software package includes a deployment software package (including a container image file) and a containerized deployment template. The containerized deployment template may be understood as an original containerized deployment template that is set before delivery. After the operator enters, on a VNFM window based on the original containerized deployment template, a value of a related parameter given in the template, the VNFM may obtain a first VNFD template used to deploy the first VNF. The first VNFD template includes a quantity of VDU instances that need to be deployed in the first VNF and requirement information on deploying these VDUs. Requirement information of each VDU includes requirement information that is of a node group and that is used to deploy the VDU.

S602: The operator triggers a first VNF instantiation request by using the NFVO window. Correspondingly, the NFVO receives the first VNF instantiation request from the operator.

For a process in which the operator initiating the first VNF instantiation request on the NFVO window, refer to the description in S402. Details are not described herein again.

S603: The NFVO obtains a resource remainder status of a node in each node group in a system from the CaaS manager.

S604: The NFVO analyzes deployment resource planning based on an obtained remaining resource result and a deployment requirement of the first VNF, and determines whether a new node group needs to be created.

A process of determining whether a new node group needs to be created is basically the same as the manual management described in S303. The only difference is that this embodiment is implemented based on software automation. Details are not described herein again.

Optionally, when determining that no new node group needs to be added, the NFVO performs the steps in FIG. 2, where the first request message is used to request to instantiate the first VNF.

Optionally, when determining that a new node group needs to be added, the NFVO proceeds to perform S605.

S605: The NFVO sends node group creation information and node creation information to the CaaS manager. Correspondingly, the CaaS manager receives the node group creation information and the node creation information from the NFVO.

S606: The CaaS manager creates a node group and a node in the system based on the node group creation information and the node creation information.

S607: The CaaS manager sends a response message indicating completion of node group addition and node addition to the NFVO. Correspondingly, the NFVO receives the response message indicating completion of node addition from the CaaS manager.

For S605 to S607, refer to the descriptions in S305 to S307 and S310 to S312, provided that the VNFM in S305 to S307 and S310 to S312 is replaced with the NFVO. Details are not described herein again.

Then, the NFVO may perform the steps in FIG. 2, where the first request message is used to request to instantiate the first VNF.

For example, in the methods shown in FIG. 3 to FIG. 6, when the steps in FIG. 2 are performed, the first network element may not parse the first VNFD template, and only needs to send the first VNFD template to the CaaS manager. Then, the CaaS manager parses the first VNFD template to obtain requirement information on deploying (instantiating or scaling out) the first VNF, and deploys a VDU in the first VNF based on the requirement information of the first VNF.

For example, in the methods shown in FIG. 3 to FIG. 6, when the steps in FIG. 2 are performed, the first network element may parse the first VNFD template to obtain the requirement information on deploying (instantiating or scaling out) the first VNF, and then send the obtained requirement information on deploying the first VNF to the CaaS manager. Then, the CaaS manager directly deploys the VDU of the first VNF based on the requirement information of the first VNF.

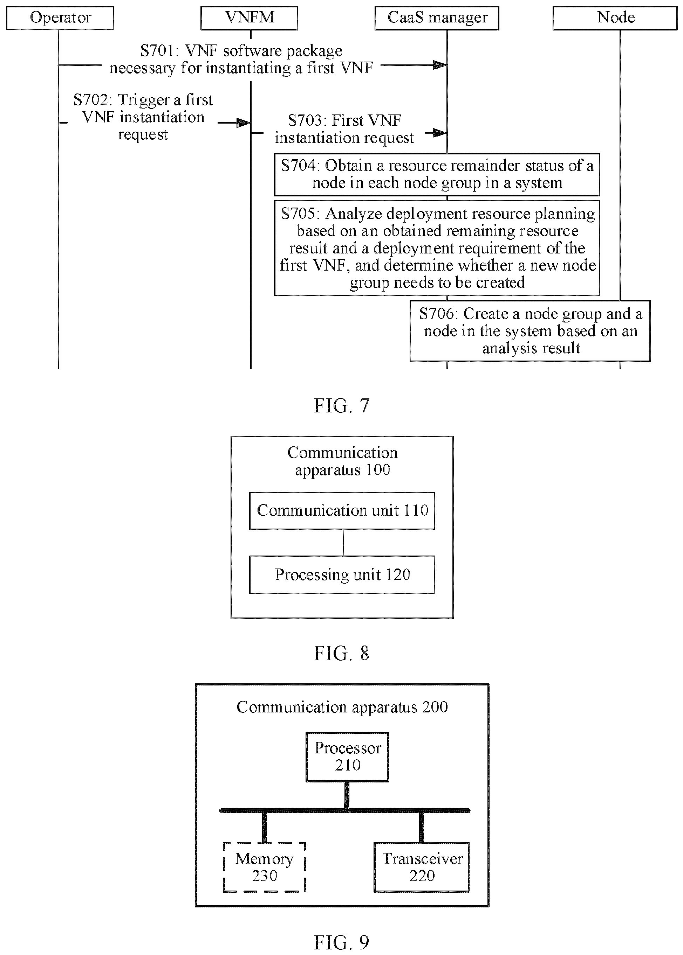

FIG. 7 is a schematic flowchart of a CaaS manager deployment-based method for automatically managing a node group in a first VNF instantiation process according to this application. In this embodiment, an example in which a first network element is a VNFM is used for description. The process includes the following steps.

For S701 and S702, refer to the descriptions in S401 and S402.

S703: The VNFM sends a first VNF instantiation request to a CaaS manager. Correspondingly, the CaaS manager receives the first VNF instantiation request from the VNFM.

S704: The CaaS manager obtains a resource usage status and a resource remainder status of a node in each node group in a system.

S705: The CaaS manager analyzes deployment resource planning based on an obtained remaining resource query result and a deployment requirement of a first VNF, and determines whether a new node group needs to be created.

A process of determining whether a new node group needs to be created is basically the same as the manual management described in S303. The only difference is that this embodiment is implemented based on software automation. Details are not described herein again.

Optionally, when the VNFM determines that no new node group needs to be added, the CaaS manager deploys a VDU in the first VNF based on the first VNF instantiation request.

Optionally, when the VNFM determines that a new node group needs to be added, S706 is performed.

S706: The CaaS manager creates a new node group and a new node in the system based on an analysis result.

Optionally, after adding the new node group and the new node, the CaaS manager may directly deploy the VDU in the first VNF based on the received first VNF instantiation request.

Optionally, after adding the new node group and the new node, the CaaS manager may notify the VNFM of information about the new node group and the new node, and the VNFM modifies a requirement for deploying the first VNF, to indicate a specific node group name needed by the first VNF. In a possible applicable scenario, an actual deployment requirement that is of the first VNF and that is on a node group does not point to the specific node group name. For example, a requirement for deploying a VNF-002 is that the VNF-002 needs to be independently deployed in an HA 1, and a total resource needed is 140v&380G. A status of a remaining resource in the HA 1 in the system is shown in Table 1. As shown in Table 3, the CaaS manager may add a node group 2 in the HA 1 based on a deployment requirement of the VNF-002, and add at least two boards in the node group. Then, the CaaS manager sends the information about the new node group and the new node to the VNFM. The VNFM may modify the requirement for deploying the VNF-002 to that the VNF-002 needs to be independently deployed in the node group 2 in the HA 1, and the total resource needed is 140v&380G.

It should be understood that only an operation process of querying and an operation process of adding a node group and a board are described in this embodiment of this application. In practice, operations of adding, deleting, modifying, and querying may all be implemented through the foregoing process. This is not limited in this application.

It should be further understood that FIG. 6 and FIG. 7 show a specific process of how the NFVO and the CaaS manager automatically manage a node group in the first VNF instantiation process. A specific process of how the NFVO and the CaaS manager automatically manage a node group in a first VNF scale-out process is basically the same as the specific process of automatically managing a node group in the first VNF instantiation process, and details are not described herein again.

It should be further understood that the solution provided in this application is mainly described by using a bare metal container, and a board resource in an HA is planned by using a node group. The method is applicable to both a virtual machine container scenario and a virtual machine scenario. In the virtual machine container scenario and the virtual machine scenario, the CaaS manager in the foregoing method is replaced with a VIM component to obtain a resource remainder status of a node group in the system. In addition, operation processes of adding, deleting, modifying, and querying a node group and a board node are also applicable.

It should be understood that sequence numbers of the foregoing processes do not mean a sequence of performing the processes. The sequence of performing the processes should be determined according to functions and internal logic of the processes, and should not be construed as any limitation on the implementation processes of the embodiments of this application.

It should be further understood that, in embodiments of this application, unless otherwise stated or there is a logic conflict, terms and/or descriptions in different embodiments are consistent and may be mutually referenced, and technical features in different embodiments may be combined, based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device may alternatively be implemented by a component of the device.

The methods provided in embodiments of this application are described above in detail with reference to FIG. 1 to FIG. 7. The foregoing methods are mainly described from a perspective of interaction between a first network element and a CaaS manager. It may be understood that, to implement the foregoing functions, the first network element and the CaaS manager each include a corresponding hardware structure and/or a software module for performing each function.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes in detail communication apparatuses provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, some content is not described again. In embodiments of this application, a first network element or a CaaS manager may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. An example in which each functional module is obtained through division based on each corresponding function is used below for description.

FIG. 8 is a schematic block diagram of a communication apparatus 100 according to an embodiment of this application. As shown in FIG. 8, the communication apparatus 100 may include a communication unit 110 and a processing unit 120. The communication unit 110 may communicate with the outside, and the processing unit 120 is configured to process data. The communication unit 110 may also be referred to as a communication interface or a transceiver unit.

In a possible design, the apparatus 100 may implement the steps or processes performed by a transmit end device in the foregoing method embodiments. Specifically, the processing unit 120 is configured to perform processing-related operations of the transmit end device in the foregoing method embodiments, and the communication unit 110 is configured to perform sending-related operations of the transmit end device in the foregoing method embodiments.

In another possible design, the apparatus 100 may implement the steps or processes performed by a receive end device in the foregoing method embodiments. Specifically, the communication unit 110 is configured to perform receiving-related operations of the receive end device in the foregoing method embodiments, and the processing unit 120 is configured to perform processing-related operations of the receive end device in the foregoing method embodiments.

It should be understood that the apparatus 100 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 100 may be specifically the transmit end device in the foregoing embodiments, and may be configured to perform the processes and/or steps corresponding to the transmit end device in the foregoing method embodiments. Alternatively, the apparatus 100 may be specifically the receive end device in the foregoing embodiments, and may be configured to perform the processes and/or steps corresponding to the receive end device in the foregoing method embodiments. To avoid repetition, details are not described herein again.

The apparatus 100 in each of the foregoing solutions has a function of implementing the corresponding steps performed by the transmit end device in the foregoing methods, or the apparatus 100 in each of the foregoing solutions has a function of implementing the corresponding steps performed by the receive end device in the foregoing methods. The function may be implemented by hardware, or may be implemented by hardware executing corresponding software. The hardware or software includes one or more modules corresponding to the foregoing functions. For example, the communication unit may be replaced by a transceiver (for example, a sending unit in the communication unit may be replaced by a transmitter, and a receiving unit in the communication unit may be replaced by a receiver), and another unit, for example, the processing unit, may be replaced by a processor, to respectively perform a sending and receiving operation and a related processing operation in each method embodiment.

In addition, the communication unit may alternatively be a transceiver circuit (for example, may include a receiving circuit and a sending circuit), and the processing unit may be a processing circuit. The communication unit may be an input/output circuit or a communication interface. The processing unit is a processor, a microprocessor, or an integrated circuit integrated on the chip. This is not limited herein.

FIG. 9 is a schematic block diagram of a communication apparatus 200 according to an embodiment of this application. The apparatus 200 includes a processor 210 and a transceiver 220. The processor 210 and the transceiver 220 communicate with each other through an internal connection path, and the processor 210 is configured to execute instructions, to control the transceiver 220 to send a signal and/or receive a signal.

Optionally, the apparatus 200 may further include a memory 230. The memory 230 communicates with the processor 210 and the transceiver 220 through an internal connection path. The memory 230 is configured to store instructions, and the processor 210 may execute the instructions stored in the memory 230. In a possible implementation, the apparatus 200 is configured to implement the processes and steps corresponding to the transmit end device in the foregoing method embodiments. In another possible implementation, the apparatus 200 is configured to implement the processes and steps corresponding to the receive end device in the foregoing method embodiments.

It should be understood that, the apparatus 200 may be specifically the transmit end device or the receive end device in the foregoing embodiments, or may be a chip or a chip system. Correspondingly, the transceiver 220 may be a transceiver circuit of the chip. This is not limited herein. Specifically, the apparatus 200 may be configured to perform the steps and/or processes corresponding to the transmit end device or the receive end device in the foregoing method embodiments. Optionally, the memory 230 may include a read-only memory and a random access memory, and provide instructions and data to the processor. A part of the memory may further include a non-volatile random access memory. For example, the memory may further store information of a device type. The processor 210 may be configured to execute the instructions stored in the memory. When the processor 210 executes the instructions stored in the memory, the processor 210 is configured to perform the steps and/or processes of the method embodiment corresponding to the transmit end device or the receive end device.

In an implementation process, steps in the foregoing methods may be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory or an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. Steps of the methods disclosed with reference to embodiments of this application may be directly performed by a hardware decoding processor, or may be performed by using a combination of hardware in the decoding processor and a software module. The software module may be located in a mature storage medium in the art, for example, a random access memory, a flash memory, a read-only memory, a programmable read-only memory or an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and methods described in this specification includes but is not limited to these memories and any memory of another proper type.

In addition, this application further provides a computer-readable storage medium. The computer-readable storage medium stores computer instructions. When the computer instructions are run on a computer, the methods in method embodiments of this application are performed.

According to the methods provided in embodiments of this application, this application further provides a computer program product. The computer program product includes computer program code or instructions. When the computer program code or the instructions are run on a computer, the methods in method embodiments of this application are performed.

According to the methods provided in embodiments of this application, this application further provides a computer-readable medium. The computer-readable medium stores program code. When the program code is run on a computer, the computer is enabled to perform the methods in method embodiments of this application.

In addition, this application further provides a chip, and the chip includes a processor. A memory configured to store a computer program is disposed independently of the chip, and the processor is configured to execute the computer program stored in the memory, so that the methods in method embodiments of this application are performed.

Further, the chip may further include a communication interface. The communication interface may be an input/output interface, an interface circuit, or the like. Further, the chip may further include the memory.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for deploying a virtualized network function VNF, comprising:
sending, by a first network element, a first request message to a container as a service CaaS manager, wherein the first request message is used to request to deploy a first virtual deployment unit VDU of a first VNF, the first request message comprises requirement information of the first VDU, the requirement information of the first VDU comprises requirement information that is of a node group and that is used to deploy the first VDU, and the node group is a set of one or more nodes in one host aggregate HA; and
receiving, by the first network element, a first request response message from the CaaS manager, wherein the first request response message indicates that the first VDU is successfully deployed, the first VDU is deployed on a first node, the first node belongs to a first node group, and the first node group meets the requirement information of the node group.

2. The method according to claim 1, wherein the requirement information of the node group is label requirement information of the node group.

3. The method according to claim 1 or 2, wherein the requirement information of the first VDU further comprises requirement information that is of an HA and that is used to deploy the first VDU.

4. The method according to any one of claims 1 to 3, wherein the method further comprises:
obtaining, by the first network element, first information, wherein the first information indicates to create N nodes in the first node group, the N nodes comprise the first node, and N is a positive integer;
sending, by the first network element, a second request message to the CaaS manager, wherein the second request message is used to request to create the N nodes in the first node group; and
receiving, by the first network element, a second request response message from the CaaS manager, wherein the second request response message indicates that the N nodes are created.

5. The method according to claim 4, wherein the method further comprises:
obtaining, by the first network element, second information, wherein the second information indicates to create the first node group in a first HA;
sending, by the first network element, a third request message to the CaaS manager, wherein the third request message is used to request to create the first node group in the first HA; and
receiving, by the first network element, a third request response message from the CaaS manager, wherein the third request response message indicates that the first node group is created.

6. The method according to claim 5, wherein the obtaining, by the first network element, first information, and the obtaining, by the first network element, second information comprise:
receiving, by the first network element, the first information and the second information from a user.

7. The method according to claim 5, wherein the obtaining, by the first network element, first information, and the obtaining, by the first network element, second information comprise:
receiving, by the first network element, a fourth request message from a user, wherein the fourth request message is used to request to deploy the first VDU, the fourth request message comprises the requirement information of the first VDU, and the requirement information of the first VDU further comprises requirement information on a size of a resource necessary for deploying the first VDU;
obtaining, by the first network element, information about an available resource of a node in each node group in one or more HAs, wherein the one or more HAs comprise the first HA; and
determining, by the first network element, the first information and the second information based on the information about the available resource and the requirement information of the first VDU.

8. The method according to claim 7, wherein
the first request message and the fourth request message are used to request to instantiate the first VDU; or
the first request message and the fourth request message are used to request to deploy the first VDU for scale-out of the first VNF.

9. The method according to any one of claims 1 to 8, wherein the first network element is a virtualized network function manager VNFM or a network functions virtualization orchestrator NFVO.

10. A method for deploying a virtualized network function VNF, comprising:
receiving, by a container as a service CaaS manager, a first request message from a first network element, wherein the first request message is used to request to deploy a first virtual deployment unit VDU of a first VNF, the first request message comprises requirement information of the first VDU, the requirement information of the first VDU comprises requirement information that is of a node group and that is used to deploy the first VDU, and the node group is a set of one or more nodes in one host aggregate HA;
deploying, by the CaaS manager, the first VDU on a first node based on the first request message, wherein the first node belongs to a first node group, and the first node group meets the requirement information of the node group; and
sending, by the CaaS manager, a first request response message to the first network element, wherein the first request response message indicates that the first VDU is successfully deployed.

11. The method according to claim 10, wherein the requirement information of the node group is label requirement information of the node group.

12. The method according to claim 10 or 11, wherein the requirement information of the first VDU further comprises requirement information that is of an HA and that is used to deploy the first VDU.

13. The method according to any one of claims 10 to 12, wherein the method further comprises:
receiving, by the CaaS manager, a second request message from the first network element, wherein the second request message is used to request to create N nodes in the first node group; and
sending, by the CaaS manager, a second request response message to the first network element, wherein the second request response message indicates that the N nodes are created.

14. The method according to claim 13, wherein the method further comprises:
receiving, by the CaaS manager, a third request message from the first network element, wherein the third request message is used to request to create the first node group in a first HA; and
sending, by the CaaS manager, a third request response message to the first network element, wherein the third request response message indicates that the first node group is created.

15. The method according to any one of claims 10 to 12, wherein the requirement information of the first VDU further comprises requirement information on a size of a resource necessary for deploying the first VDU, and the method further comprises:
creating, by the CaaS manager, the first node group in a first HA;
creating, by the CaaS manager, N nodes in the first node group, wherein the N nodes comprise the first node, N is a positive integer, creation of the first node group and creation of the N nodes are determined by the CaaS manager based on information about an available resource of a node in each node group in one or more HAs and the requirement information of the first VDU, and the one or more HAs comprise the first HA; and
sending, by the CaaS manager, third information to the first network element, wherein the third information comprises information about the first node group and information about the N nodes.

16. The method according to any one of claims 10 to 15, wherein
the first request message and a fourth request message are used to request to instantiate the first VDU; or
the first request message and a fourth request message are used to request to deploy the first VDU for scale-out of the first VNF.

17. The method according to any one of claims 10 to 16, wherein the first network element is a virtualized network function manager VNFM or a network functions virtualization orchestrator NFVO.

18. A communication apparatus, comprising:
a communication unit, configured to send a first request message to a container as a service CaaS manager, wherein the first request message is used to request to deploy a first virtual deployment unit VDU of a first VNF, the first request message comprises requirement information of the first VDU, the requirement information of the first VDU comprises requirement information that is of a node group and that is used to deploy the first VDU, and the node group is a set of one or more nodes in one host aggregate HA, wherein
the communication unit is further configured to receive a first request response message from the CaaS manager, wherein the first request response message indicates that the first VDU is successfully deployed, the first VDU is deployed on a first node, the first node belongs to a first node group, and the first node group meets the requirement information of the node group.

19. The apparatus according to claim 18, wherein the requirement information of the node group is label requirement information of the node group.

20. The apparatus according to claim 17 or 18, wherein the requirement information of the first VDU further comprises requirement information that is of an HA and that is used to deploy the first VDU.

21. The apparatus according to any one of claims 17 to 20, wherein
the communication unit is further configured to obtain first information, wherein the first information indicates to create N nodes in the first node group, the N nodes comprise the first node, and N is a positive integer;
the communication unit is further configured to send a second request message to the CaaS manager, wherein the second request message is used to request to create the N nodes in the first node group; and
the communication unit is further configured to receive a second request response message from the CaaS manager, wherein the second request response message indicates that the N nodes are created.

22. The apparatus according to claim 21, wherein the communication unit is further configured to obtain second information, wherein the second information indicates to create the first node group in a first HA;
the communication unit is further configured to send a third request message to the CaaS manager, wherein the third request message is used to request to create the first node group in the first HA; and
the communication unit is further configured to receive a third request response message from the CaaS manager, wherein the third request response message indicates that the first node group is created.

23. The apparatus according to claim 22, wherein the communication unit is specifically configured to:
receive the first information and the second information from a user.

24. The apparatus according to claim 22, wherein the communication unit is further configured to receive a fourth request message from a user, wherein the fourth request message is used to request to deploy the first VDU, the fourth request message comprises the requirement information of the first VDU, and the requirement information of the first VDU further comprises requirement information on a size of a resource necessary for deploying the first VDU; and
the communication unit is further configured to obtain information about an available resource of a node in each node group in one or more HAs, wherein the one or more HAs comprise the first HA; and
the apparatus further comprises a processing unit, configured to determine the first information and the second information based on the information about the available resource and the requirement information of the first VDU.

25. The apparatus according to claim 24, wherein
the first request message and the fourth request message are used to request to instantiate the first VDU; or
the first request message and the fourth request message are used to request to deploy the first VDU for scale-out of the first VNF.

26. A communication apparatus, comprising:
a communication unit, configured to receive a first request message from a first network element, wherein the first request message is used to request to deploy a first virtual deployment unit VDU of a first VNF, the first request message comprises requirement information of the first VDU, the requirement information of the first VDU comprises requirement information that is of a node group and that is used to deploy the first VDU, and the node group is a set of one or more nodes in one host aggregate HA; and
a processing unit, configured to deploy the first VDU on a first node based on the first request message, wherein the first node belongs to a first node group, and the first node group meets the requirement information of the node group, wherein
the communication unit is further configured to send a first request response message to the first network element, wherein the first request response message indicates that the first VDU is successfully deployed.

27. The apparatus according to claim 26, wherein the requirement information of the node group is label requirement information of the node group.

28. The apparatus according to claim 26 or 27, wherein the requirement information of the first VDU further comprises requirement information that is of an HA and that is used to deploy the first VDU.

29. The apparatus according to any one of claims 26 to 28, wherein
the communication unit is further configured to receive a second request message from the first network element, wherein the second request message is used to request to create N nodes in the first node group; and
the communication unit is further configured to send a second request response message to the first network element, wherein the second request response message indicates that the N nodes are created.

30. The apparatus according to claim 29, wherein
the communication unit is further configured to receive a third request message from the first network element, wherein the third request message is used to request to create the first node group in a first HA; and
the communication unit is further configured to send a third request response message to the first network element, wherein the third request response message indicates that the first node group is created.

31. The apparatus according to any one of claims 26 to 28, wherein the requirement information of the first VDU further comprises requirement information on a size of a resource necessary for deploying the first VDU, and the processing unit is further configured to create the first node group in a first HA;
the processing unit is further configured to create N nodes in the first node group, wherein the N nodes comprise the first node, N is a positive integer, creation of the first node group and creation of the N nodes are determined by the processing unit based on information about an available resource of a node in each node group in one or more HAs and the requirement information of the first VDU, and the one or more HAs comprise the first HA; and
the communication unit is further configured to send third information to the first network element, wherein the third information comprises information about the first node group and information about the N nodes.

32. The apparatus according to any one of claims 26 to 31, wherein
the first request message and a fourth request message are used to request to instantiate the first VDU; or
the first request message and a fourth request message are used to request to deploy the first VDU for scale-out of the first VNF.

33. A communication apparatus, wherein the communication apparatus comprises at least one processor and at least one memory, the at least one memory is configured to store a computer program or instructions, and the at least one processor is configured to execute the computer program or the instructions in the memory, so that the method according to any one of claims 1 to 9 or the method according to any one of claims 10 to 17 is performed.

34. A computer-readable storage medium, wherein the computer-readable storage medium stores computer instructions, and when the computer instructions are run on a computer, the method according to any one of claims 1 to 9 or the method according to any one of claims 10 to 17 is performed.

35. A computer program product, wherein the computer program product comprises computer program code, and when the computer program code is run on a computer, the method according to any one of claims 1 to 9 or the method according to any one of claims 10 to 17 is performed.

36. A communication system, comprising a first network element and a container as a service CaaS manager, wherein
the first network element is configured to perform the method according to any one of claims 1 to 9; and
the CaaS manager is configured to perform the method according to any one of claims 10 to 17.

37. A method for deploying a virtualized network function VNF, comprising:
sending, by a first network element, a first request message to a container as a service CaaS manager, wherein the first request message is used to request to deploy a first virtual deployment unit VDU of a first VNF, the first request message comprises requirement information of the first VDU, the requirement information of the first VDU comprises requirement information that is of a node group and that is used to deploy the first VDU, and the node group is a set of one or more nodes in one host aggregate HA; and
receiving, by the CaaS manager, the first request message from the first network element;
deploying, by the CaaS manager, the first VDU on a first node based on the first request message, wherein the first node belongs to a first node group, and the first node group meets the requirement information of the node group;
sending, by the CaaS manager, a first request response message to the first network element, wherein the first request response message indicates that the first VDU is successfully deployed; and
receiving, by the first network element, the first request response message from the CaaS manager.
